(19) Europäisches Patentamt / European Patent Office / Office européen des brevets

(11) **EP 4 745 907 A1**

(12) **EUROPEAN PATENT APPLICATION**

(43) Date of publication:
20.05.2026 Bulletin 2026/21

(21) Application number: 25215965.2

(22) Date of filing: 14.11.2025

(51) International Patent Classification (IPC):
*G06V 10/42* (2022.01)    *G06V 10/44* (2022.01)
*G06V 10/82* (2022.01)    *G06V 20/40* (2022.01)
*G06V 10/62* (2022.01)    *G06N 3/0464* (2023.01)

(52) Cooperative Patent Classification (CPC):
G06V 10/431; G06N 3/0442; G06N 3/045;
G06N 3/0464; G06N 3/048; G06N 3/08; G06N 3/09;
G06V 10/454; G06V 10/62; G06V 10/82;
G06V 20/46

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 14.11.2024 KR 20240162354

(71) Applicant: **Chung Ang University Industry
Academic
Cooperation Foundation
Seoul 06974 (KR)**

(72) Inventors:
• **CHOI, Jong Won**
  **52831 Jinju-si, Gyeongsangnam-do (KR)**
• **KIM, Tae Hoon**
  **18316 Hwaseong-si, Gyeonggi-do (KR)**
• **CHOI, Jong Wook**
  **07005 Seoul (KR)**
• **NOH, Ha Eun**
  **14102 Anyang-si, Gyeonggi-do (KR)**

(74) Representative: **Isarpatent
Patent- und Rechtsanwälte PartG mbB
Friedrichstraße 31
80801 München (DE)**

(54) **APPARATUS AND METHOD FOR DETECTING DEEPFAKE VIDEOS**

(57) Disclosed are an apparatus for detecting deepfake videos. The apparatus for detecting deepfake videos according to an embodiment includes a feature extractor configured to generate a global frequency feature and one or more part-based frequency features of an input video and a video determiner configured to determine whether the input video is a deepfake based on the global frequency feature and the one or more part-based frequency features.

## FIG. 1

**Description**

BACKGROUND

**1. Field**

The present disclosure relates to an apparatus and method for detecting deepfake videos.

**2. Description of Related Art**

Early deepfake detection techniques focused primarily on the spatial characteristics of videos to detect visual anomalies such as boundaries, color inconsistencies, and resolution differences that appear in forged videos. These methods use convolutional neural networks (CNNs) to learn specific spatial features to detect distorted pixels or shaking that occur when synthetic images are generated. In addition, some studies have analyzed inter-frame consistency using recurrent neural networks (RNNs) or GRUs to detect temporal discontinuities in deepfake videos. However, with the recent advanced generative technologies, the limitations of detecting forged videos through simple spatial analysis alone have become significant.

Examples of related art may include Korean Unexamined Patent Application Publication No. 10-2023-0130820.

**SUMMARY**

Embodiments of the present disclosure are intended to provide an apparatus and method for detecting deepfake videos that can effectively detect subtle temporal inconsistencies appearing in deepfake videos through frequency-based analysis on the time axis.

According to an embodiment of the present disclosure, there is provided an apparatus for detecting deepfake videos that includes one or more processors and a memory storing one or more programs executed by the one or more processors, the apparatus including a feature extractor configured to generate a global frequency feature and one or more part-based frequency features of an input video and a video determiner configured to determine whether the input video is a deepfake based on the global frequency feature and the one or more part-based frequency features.

The feature extractor may be configured to divide the input video into clips composed of a plurality of consecutive frames, and include a Fourier transformer configured to generate global time frequency data by performing a Fourier transform in the time axis direction for each pixel in the plurality of consecutive frames.

The feature extractor may be configured to input a preprocessed frame obtained by applying a median filter to each of the plurality of frames and converting the frame to which the median filter is applied into gray scale.

The feature extractor may further include a convolutional neural network configured to receive the global time frequency data as input and extract a global frequency feature and one or more part-based frequency features.

The feature extractor may be configured to further extract step-wise features for the global time frequency data from each block constituting the convolutional neural network, and the feature extractor may further include an attention proposal module configured to receive the global time frequency data and the step-wise features extracted from the convolutional neural network as input and extract center coordinates for one or more regions of interest of the input video.

The feature extractor may be configured to generate part-based time frequency data for the region of interest based on the center coordinates of the region of interest from the global time frequency data.

The feature extractor may be configured to input the part-based time frequency data for the region of interest into the convolutional neural network to extract the one or more part-based frequency features.

The video determiner may include a temporal transformer encoder configured to generate a temporal embedding for a temporal relationship between pixels occurring along the time axis based on the global frequency feature, a spatial transformer encoder configured to generate a spatial embedding for a spatial relationship based on the part-based frequency features, and a classifier configured to classify whether the input video is a deepfake video based on the temporal embedding and the spatial embedding.

The video determiner may further include a feature blender configured to receive the global frequency feature, the one or more part-based frequency features, and the clip as input and generate an integrated feature.

The temporal transformer encoder may be configured to additionally receive the integrated feature as input in addition to the global frequency feature to generate the temporal embedding, and the spatial transformer encoder may be configured to additionally receive the integrated feature as input in addition to the one or more part-based frequency features to generate the spatial embedding.

According to another embodiment of the present disclosure, there is provided a method of detecting deepfake videos performed on a computing device that includes one or more processors and a memory storing one or more programs executed by the one or more processors, the method including generating a global frequency feature and one or more part-based frequency features of an input video, and determining whether the input video is a deepfake based on the global frequency feature and the one or more part-based frequency features.

The generating of the global frequency feature and one or more part-based frequency features may include dividing the input video into clips composed of a plurality of consecutive frames and generating global time frequency data by performing a Fourier transform in the time axis direction for each pixel in the plurality of consecutive frames.

The generating of the global frequency feature and one or more part-based frequency features may include inputting the global time frequency data into a convolutional neural network to extract a global frequency feature for the global time frequency data, and extracting step-wise features for the global time frequency data from each block constituting the convolutional neural network.

The generating of the global frequency feature and one or more part-based frequency features may include extracting center coordinates of one or more regions of interest of the input video based on the global time frequency data and the step-wise features extracted from the convolutional neural network, generating part-based time frequency data for the region of interest based on the center coordinates of the region of interest from the global time frequency data, and inputting the part-based time frequency data for the region of interest into the convolutional neural network to extract the one or more part-based frequency features.

## BRIEF DESCRIPTION OF THE DRAWINGS

FIG. 1 is a configuration diagram of an apparatus for detecting deepfake videos according to an embodiment.

FIG. 2 is a diagram illustrating a framework of an apparatus for detecting deepfake videos according to an embodiment of the present disclosure.

FIG. 3 is a diagram showing the configuration and operation of a spatial transformer encoder and a temporal transformer encoder in an embodiment of the present disclosure.

FIG. 4 is a flowchart illustrating a method of detecting deepfake videos according to an embodiment.

FIG. 5 is a block diagram illustrating a computing environment including a computing device suitable for use in exemplary embodiments.

## DETAILED DESCRIPTION

Hereinafter, specific embodiments of the present disclosure will be described with reference to the drawings. The following detailed description is provided to facilitate a comprehensive understanding of the methods, apparatuses, and/or systems described herein. However, this is only an example and the present disclosure is not limited thereto.

In describing embodiments of the present disclosure, if it is determined that a specific description of a related known function of the preset invention may unnecessarily obscure the gist of the present disclosure, the detailed description thereof will be omitted. The terms described below are terms defined in consideration of the functions in the present disclosure, and vary depending on the intention or custom of the user or operator. Therefore, the definition should be made based on the contents throughout this specification. The terms used in the detailed description is for the purpose of describing embodiments of the present disclosure only and should not be construed as limiting. Unless expressly used otherwise, singular forms include plural forms. In this description, the terms "including" or "comprising" are intended to refer to certain features, numbers, steps, operations, elements, portions or combinations thereof, and should not be construed to exclude the presence or possibility of one or more other features, numbers, steps, operations, elements, portions or combinations thereof other than those described.

In addition, terms such as "first," "second," etc. may be used to describe various components, but the components should not be limited by the terms. The terms may be used to distinguish one component from another. For example, without departing from the scope of the present disclosure, a first component may be referred to as a second component, and similarly, a second component may also be referred to a first component.

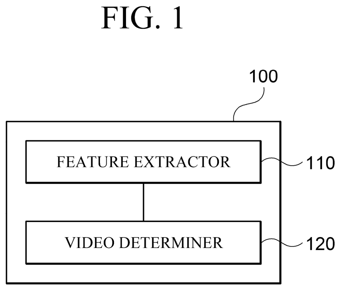

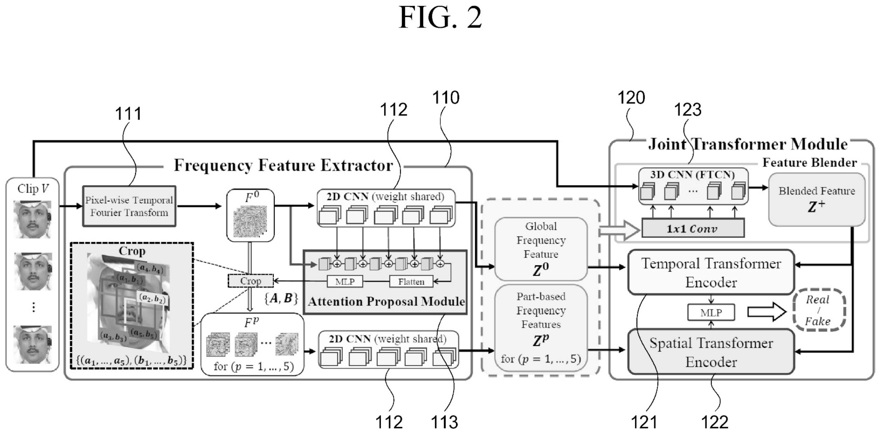

FIG. 1 is a configuration diagram of an apparatus for detecting deepfake videos according to an embodiment, and FIG. 2 is a diagram illustrating a framework of an apparatus for detecting deepfake videos according to an embodiment of the present disclosure.

Referring to FIGS. 1 and 2, an apparatus for detecting deepfake videos 100 may include a feature extractor 110 that generates a global frequency feature and one or more part-based frequency features of an input video and a video determiner 120 that determines whether the input video is a deepfake based on the global frequency feature and the one or more part-based frequency features.

According to an embodiment, the feature extractor 110 may include a Fourier transformer 111 that converts temporal changes of each pixel of the entire input video into frequency components using Fourier transform to generate global time frequency data.

As an example, the feature extractor 110 may generate global time frequency data $F^0$ to capture temporal inconsistency in the input video. To this end, the feature extractor 110 may apply a median filter to each frame of the input video to remove dominant components and convert the frame to gray scale to generate a preprocessed frame.

For example, the feature extractor 110 may divide a facial video into a clip $V \in R^{C \times T \times H \times W}$ composed of T consecutive frames. The feature extractor 110 may obtain a preprocessed frame $\hat{I}^t$ by applying a median filter to each frame image $I^t \in R^{C \times H \times W}$ to remove the dominat component and converting the same to gray scale. For example, the preprocessed frame $\hat{I}^t$ may be represented by Equation 1 below.

[Equation 1]

$$\hat{I}^t = \text{gray}(I^t - \text{Median}(I^t))$$

Here, Median(I) is an image with the median filter applied, and gray(I) is a function that converts a color image to grayscale. Thereafter the pre-processed video clip may be defined as $\hat{V} \equiv \{\hat{I}^1, \hat{I}^2, ..., \hat{I}^T\}$.

Thereafter, the feature extractor 110 may perform a 1D Fourier transform in the time axis direction for each pixel of the preprocessed video to extract the temporal frequency component. The feature extractor 110 may generate global time frequency data $F^0$ by integrating the pixel-wise temporal frequency spectrum across the entire video.

Specifically, the feature extractor 110 may extract a pixel-wise temporal frequency spectrum from a video clip $\hat{V}$. For example, the pixel-wise temporal vector at pixel position (x,y) may be represented as $\hat{V}_{x,y} \in R^{1 \times T}$, and the pixel-wise temporal frequency spectrum at that position may be represented as follows.

[Equation 2]

$$F_{x,y} = \mathcal{F}(\hat{V}_{x,y})$$

Here, $\mathcal{F}$ (v) is a 1-dimensional frequency magnitude spectrum of input v. Since the input vector is real-valued, the symmetric parts of the magnitude spectrum are ignored, and thus the shape of $F_{x,y}$ becomes $R^{1 \times T/2}$. Then, by integrating $F_{x,y}$ for each pixel, global time frequency data $F^0 \in R^{1 \times T/2 \times H \times W}$ may be obtained. Global temporal frequency data $F^0$ is data that summarizes the temporal changes of the entire video and may be used to detect subtle temporal inconsistencies and discrepancies that may occur in deepfake videos.

According to an embodiment, the feature extractor 110 may include a convolutional neural network 112 that extracts the global frequency feature and the part-based frequency features from the global temporal frequency data.

Convolutional neural networks (CNNs) may be used for feature extraction and integration for deepfake video detection. Convolutional neural networks can detect subtle alterations or inconsistencies occurring in facial videos by analyzing frequency information of the input video spatially and temporally. For example, the feature extractor 110 may receive global temporal frequency data using 2D ResNet, learn the frequency components of each pixel, and thereby recognize the overall spatial pattern within the video.

According to an embodiment, the feature extractor 110 may input global temporal frequency data into the convolutional neural network 112 to extract the global frequency feature and step-wise features for the global time frequency data from each block constituting the convolutional neural network 112.

The feature extractor 110 may input the global temporal frequency data $F^0$ into a 2D convolutional neural network to generate a global frequency feature $Z^0 \in R^{D_H \times D_W \times D_C}$. In the first convolution layer of 2D convolutional neural network, the number of input channels may be increased to T/2 to extract frequency features.

According to an embodiment, the feature extractor 110 may include an attention proposal module (APM) 113 that generates one or more center coordinates of the regions of interest based on the global temporal frequency data and the step-wise features in each block of the convolutional neural network 112 for the global temporal frequency data.

The attention proposal module 113 may effectively extract a specific region (i.e., region of interest) from an image using features extracted from the initial convolutional layer of the 2D convolutional neural network and extracted from each block. The attention proposal module 113 may receive global temporal frequency data $F^0$ and the feature extracted from the i-th block of the 2D convolutional neural network 112 as input and generate a set of coordinates [A, B] for a plurality of regions of interest to be focused on (i.e., regions of interest to be focused on) to determine whether the image is a deepfake video) in the video through regression analysis, as shown in Equation 3 below.

[Equation 3]

$$[A, B] = \text{APM}(F^0, z^0_{(0)}, z^0_{(1)}, ..., z^0_{(L)})$$

Here, $z^0_{(l)}$ is a feature extracted from the 1-th convolutional layer of a 2D convolutional neural network, and L represents the number of blocks of the convolutional neural network 112. $A=\{a_1, a_2, a_3, a_4, a_5\}$ and $B=\{b_1, b_2, b_3, b_4, b_5\}$ are the center coordinates of the x-axis and y-axis for the five regions of interest proposed by the attention proposal module 113.

According to an embodiment, the feature extractor 110 may generate part-based time frequency data $F^P$ for one or more regions of interest based on one or more center coordinates of the regions of interest. The attention proposal module 113 may generate a mask map $M_p$ using the center coordinates $a_p$ and $b_p$ of each region of interest p for each region of interest p, and calculate the part-based time frequency data $F^P$ of the corresponding region of interest through element-wise multiplication $\odot$ as follows to extract the part-based time frequency data $F^P$ from the global temporal frequency data $F^0$.

[Equation 4]

$$F^p = F^0 \odot M_p(a_p, b_p)$$

Here, the mask map $M_p(a_p, b_p)$ is an array of size $1 \times T/2 \times H \times W$, and has the value 1 for a rectangular region where $(a_p - \theta, b_p - \theta)$ is the upper-left coordinate and $(a_p + \theta, b_p + \theta)$ is the lower-right coordinate, and has the value 0 for remaining regions. Here, $\theta$ can be an initial rectangle size that is empirically set. To make $M_p(a_p, b_p)$ derived from $a_p$ and $b_p$ differentiable, the following operation can be applied.

[Equation 5]

$$M_p(a_p, b_p) = [h(\mathbf{y} - (a_p - \theta)) - h(\mathbf{y} - (a_p + \theta))]$$
$$\times [h(\mathbf{x} - (b_p - \theta)) - h(\mathbf{x} - (b_p + \theta))]$$

Here, $h(v)$ is an element-wise logistic function with a scale factor of 10, $\mathbf{x}$ is a W-dimensional vector having values ranging from 0 to W, and $\mathbf{y}$ is an H-dimensional vector having values ranging from 0 to H.

According to an embodiment, the feature extractor 110 may input part-based time frequency data for one or more regions of interest into the convolutional neural network 112 to extract one or more part-based frequency features $Z^P$. In the Equation 5 above, each p-th partial feature $F^P \in R^{T/2 \times (2 \times \theta) \times (2 \times \theta)}$ may be input again into the 2D convolutional neural network to extract the part-based frequency feature $Z^P$ for $p \in \{1,...,5\}$.

According to an embodiment, the video determiner 120 may include a temporal transformer encoder 121 that generates a temporal embedding for the temporal relationship between pixels occurring along the time axis based on the global frequency feature $Z^0$ and a spatial transformer encoder 122 that generates a spatial embedding for spatial relationship based on the part-based frequency features $Z^P$. In addition, the video determiner 120 may include a feature blender 123.

The feature blender 123 may generate an integrated feature obtained by integrating a raw feature obtained by inputting a raw video clip V into a 3D convolutional neural network, the global frequency feature, and the part-based frequency features.

Here, the feature extracted from the i-th block of the 2D convolutional neural network using $F^P$ may be defined as $z^p_{(i)_{F^P}}$. For example, $z^p_{(0)}$ refers to the features extracted from the initial convolutional layer of the 2D convolutional neural network with $F^P$ as input. First, various frequency features may be integrated through $1 \times 1$ convolution layers ($1 \times 1$ Conc) as shown in Equation 6 below.

[Equation 6]

$$\tilde{z}_{(i)} = Conv^f_{1\times 1}\left(\sum_{p=1}^{5} Conv^p_{1\times 1}(z^p_{(i)}) + Conv^0_{1\times 1}(z^0_{(i)})\right)$$

Here, $Conv^0_{1\times 1}$, $Conv^p_{1\times 1}$, and $Conv^f_{1\times 1}$ represent the output functions of separate 1×1 convolutional layers, respectively. $Conv^f_{1\times 1}$ consists of two consecutive convolution layers, with the number of channels being halved at the first layer and then restored to the original amount at the second one, with a ReLU activation function placed between them. The weights of the second layer in $Conv^f_{1\times 1}$ are initialized to zero. $Conv^0_{1\times 1}$ and each $Conv^p_{1\times 1}$ each consist of one layer.

The feature blender 123 may apply spatial interpolation to make the spatial dimension of $z^P$ match that of $z^0$, and then sum them. The shape of $\tilde{z}(i)$ is $R^{C_i \times H_i \times W_i}$, where $C_i$, $H_i$, and $W_i$ represent the size of channel, height, and width of $z^0_{(i)}$ $(i = 0, ..., 3)$.

Thereafter, $\tilde{z}(i)$ is added with the feature $Z^+_{(i)}$ obtained from the i-th layer $\Phi_i$ of the 3D convolutional neural network and passed to the (i+1)-th layer $\Phi_{i+1}$ of the 3D convolutional neural network as shown in Equation 7 below.

[Equation 7]

$$Z^+_{(i+1)} = \Phi_{i+1}(\tilde{z}_{(i)} + Z^+_{(i)})$$

Here, $Z^+_{(0)}$ is a feature obtained from the first convolutional layer of the 3D convolutional neural network to which the raw video clip V is input. In this case, since the dimensions of $\tilde{z}(i)$ and $Z^+_{(i)}$ are the same, there is no problem with the summation between them. As an example, after the feature blender 123, the integrated feature $Z^+_{(4)} \in R^{1024\times16\times14\times14}$ may be used.

To effectively capture long-range information existing in both the spatial and temporal axes, the video determiner 120 divides the three previously extracted features (i.e., the global frequency feature, the part-based frequency features, and the integrated feature) into spatial and temporal information, respectively, and trains them in the spatial transformer encoder (STE) 122 and the temporal transformer encoder (TTE) 121.

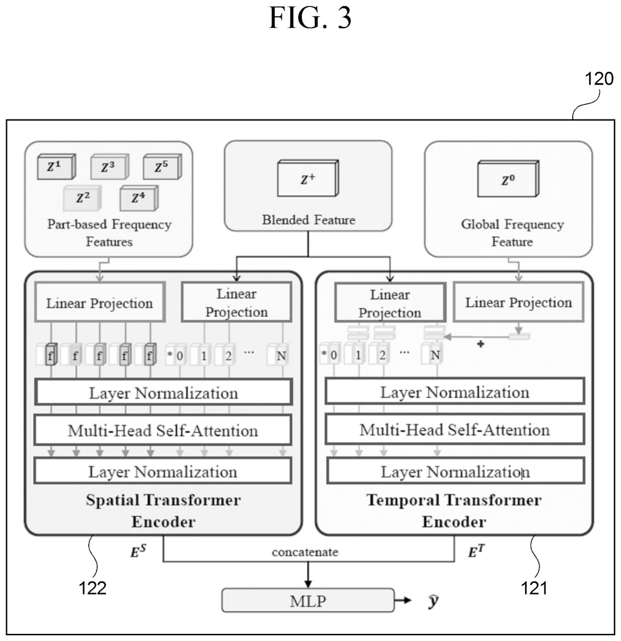

FIG. 3 is a diagram showing the configuration and operation of the spatial transformer encoder 122 and the temporal transformer encoder 121 in the video determiner 120 according to an embodiment of the present disclosure.

The spatial transformer encoder 122 is designed to enhance the interaction between the long-range information on the spatial axis obtained from the feature blender 123 and the part-based frequency features, thereby enabling it to capture complex spatial relationships. On the other hand, the temporal transformer encoder 121 may be arranged to improve the interaction by combining long-range information of the feature blender 123 and frequency-level information in the temporal domain.

The integrated feature and part-based frequency features may be input to the spatial transformer encoder 122 for spatial analysis, and the integrated features and global frequency feature may be input to the temporal transformer encoder 121 for temporal analysis. The outputs of the spatial transformer encoder 122 and the temporal transformer encoder 121 may be passed to a final classifier (MLP) to generate final prediction ŷ.

Both the spatial transformer encoder 122 and the temporal transformer encoder 121 may consist of a single layer of a standard transformer encoder. In this case, linear projection may be applied to match the dimension of the global frequency feature with the dimension of the integrated feature.

The spatial transformer encoder 122 may enhance the interaction between spatial features of the integrated feature and the part-based frequency features. The spatial transformer encoder 122 may receive the integrated feature generated by the feature blender 123 and the part-based frequency features extracted from each region of interest as input, identify complex spatial relationships, and output a spatial embedding $E^S$. This $E^S \in R^{1024}$ is a spatial table finally obtained from the spatial transformer encoder 122.

The spatial transformer encoder 122 may estimate the spatial feature $Z^{sp} \in R^{Dc \times 1 \times D_H \times D_W}$ by averaging the time axis of the integrated feature $Z^+$. This $Z^{sp}$ is converted into one token and used as input to the spatial transformer encoder 122. In this process, linear projection $W^{sp}$ may be applied to transform each feature vector $z_s^{sp} \in R^{D_C}$, $s \in \{1, 2, ..., D_H \times D_W\}$ of $Z^{sp}$, and a two-dimensional positional encoding $pos^{sp}$ may be added as shown Equation 8 below.

[Equation 8]

$$ tokens_+^{sp} = [z_{class}^{sp}, W^{sp} z_1^{sp}, ..., W^{sp} z_{D_H \times D_W}^{sp}]^T + pos^{sp} $$

Here, $Z_{class}^{sp}$ denotes an extra class embedding, and $pos^{sp}$ is spatial positional encoding, which learns spatial relationships between tokens.

The spatial transformer encoder 122 generates a positional encoding $pos_p^{part}$ using the center coordinates $(a_p, b_p)$ of each region of interest to indicate the position of each part-based frequency feature. This positional encoding is obtained by interpolating neighboring values of $pos^{sp}$ and then adding it to $pos^{freq}$, which represents the frequency domain position, as defined by Equation 9 below.

[Equation 9]

$$ pos^p = \text{interpolation}((a_p, b_p), pos^{sp}) + pos^{freq}, p \in \{1, ..., 5\} $$

Each part-based frequency feature $Z^p$ is transformed through linear projection $W^{freq}$, and positional encoding $pos^p$ may be added.

[Equation 10]

$$ tokens_{freq}^{sp} = [W^{freq} Z^1 + pos^1, ..., W^{freq} Z^5 + pos^5]^T $$

Thereafter, $tokens_+^{sp}$ and $token_{freq}^{sp}$ may be concatenated and input into the transformer, and finally the spatial embedding $E^S$ may be generated.

[Equation 11]

$$ E^S = \text{STE}(tokens_+^{sp}, tokens_{freq}^{sp}) $$

As an example, the temporal transformer encoder 121 may improve the interaction between the temporal features of the integrated feature and the global frequency feature. The temporal transformer encoder 121 may learn long-range relationships on the time axis to capture temporal changes and patterns occurring in the video. The temporal transformer encoder 121 may generate a time embedding $E^T$ by utilizing temporal information of the integrated feature.

The temporal transformer encoder 121 may receive the temporal feature $Z^{ts} \in R^{D_T \times D_C \times 1 \times 1}$ of the integrated feature $Z^+$ and the global frequency feature $Z^0$ as input. The temporal transformer encoder 121 may perform a transform on each feature vector $Z_{tp}^t \in \mathbb{R}^{D_c}$, $t \in \{1,2,...,D_T\}$ of $Z^{tp}$ by applying linear projection $W^{tp}$ and add a one-dimensional positional encoding $pos^{tp}$ in order to generate a temporal token $tokens^{tp}$

[Equation 12]

$$ tokens^{tp} = [Z_{class}^{tp}, W^{tp} Z_1^{tp}, ..., W^{tp} Z_{D_T}^{tp}]^T + pos^{tp} $$

Here, $Z_{class}^{tp}$ denotes an extra class embedding, and pos$^{tp}$ is a temporal positional encoding, which learns temporal relationships between tokens.

The temporal transformer encoder 121 may add a value obtained by applying linear projection $W_{freq}^{tp}$ to the global frequency feature Z$^0$ to tokens$^{tp}$ and input it to the Transformer, and ultimately generate a temporal embedding E$^T$.

[Equation 13]

$$E^T = \mathbf{TTE}(tokens^{tp} + W_{freq}^{tp}Z^0)$$

The E$^S$ generated from the spatial transformer encoder 122 and the E$^T$ generated from the temporal transformer encoder 121 are concatenated through linear projection W$^b$ and input to the final classifier $\phi^{final}$, through which the final prediction $\hat{y}$ (i.e., the prediction of whether the video is a deepfake video) may be generated.

[Equation 14]

$$\hat{y} = \phi^{final}(W^b E^S, E^T)$$

Here, W$^b \in$ R$^{1024}$ is a linear projection that aligns distributions.

The video determiner 120 may further include a notification means for notifying a deepfake determination result for an input video. In this case, the notification means may include one or more of a display and a speaker. The video determiner may also transmit the deepfake determination result to an external device.

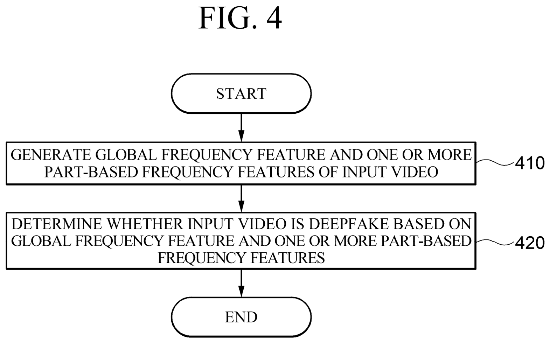

FIG. 4 is a flowchart illustrating a method for detecting deepfake videos according to an embodiment.

According to one embodiment, the apparatus for detecting deepfake videos may be a computing device having one or more processors and a memory storing one or more programs executed by the one or more processors.

According to an embodiment, the apparatus for detecting deepfake videos may generate a global frequency feature and one or more part-based frequency features of an input video (410) and determine whether the input video is a deepfake based on the global frequency feature and the one or more part-based frequency features (420).

In the description of the embodiment of FIG. 4, descriptions of the embodiment that overlap with the contents described with reference to FIGS. 1 to 3 are omitted.

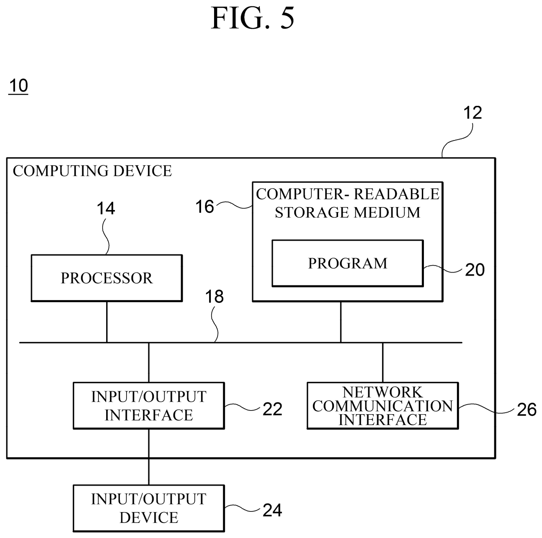

FIG. 5 is a block diagram illustrating a computing environment 10 including a computing device suitable for use in exemplary embodiments. In the illustrated embodiment, respective components may have different functions and capabilities other than those described below, and include additional components in addition to those described below.

The illustrated computing environment 10 includes a computing device 12. In an embodiment, the computing device 12 may be the apparatus for detecting deepfake videos.

The computing device 12 includes at least one processor 14, a computer-readable storage medium 16, and a communication bus 18. The processor 14 may cause the computing device 12 to operate according to the exemplary embodiment described above. For example, the processor 14 may execute one or more programs stored on the computer-readable storage medium 16. The one or more programs may include one or more computer-executable instructions, which, when executed by the processor 14, may be configured so that the computing device 12 performs operations according to the exemplary embodiment.

The computer-readable storage medium 16 is configured to store the computer-executable instruction or program code, program data, and/or other suitable forms of information. A program 20 stored in the computer-readable storage medium 16 includes a set of instructions executable by the processor 14. In an embodiment, the computer-readable storage medium 16 may be a memory (volatile memory such as a random access memory, non-volatile memory, or any suitable combination thereof), one or more magnetic disk storage devices, optical disk storage devices, flash memory devices, other types of storage media that are accessible by the computing device 12 and capable of storing desired information, or any suitable combination thereof.

The communication bus 18 interconnects various other components of the computing device 12, including the processor 14 and the computer-readable storage medium 16.

The computing device 12 may also include one or more input/output interfaces 22 that provide an interface for one or more input/output devices 24, and one or more network communication interfaces 26. The input/output interface 22 and the network communication interface 26 are connected to the communication bus 18. The input/output device 24 may be connected to other components of the computing device 12 through the input/output interface 22. The exemplary input/output device 24 may include a pointing device (such as a mouse or trackpad), a keyboard, a touch input device (such as a touch pad or touch screen), a speech or sound input device, input devices such as various types of sensor devices and/or photographing devices, and/or output devices such as a display device, a printer, a speaker, and/or a network card. The exemplary input/output device 24 may be included inside the computing device 12 as a component configuring the computing device 12, or may be connected to the computing device 12 as a separate device distinct from the computing device 12.

According to the embodiments of the present disclosure, subtle temporal inconsistencies appearing in deepfake videos can be effectively detected through frequency-based analysis on the time axis.

Although representative embodiments of the present disclosure have been described in detail above, those skilled in the art will understand that various modifications may be made to the above-described embodiments without departing from the scope of the present disclosure. Therefore, the scope of the present disclosure should not be limited to the described embodiments, but should be defined not only by the patent claims described below but also by those equivalent to the patent claims.

**Claims**

1. An apparatus for detecting deepfake videos that includes one or more processors and a memory storing one or more programs executed by the one or more processors, the apparatus comprising:

   a feature extractor configured to generate a global frequency feature and one or more part-based frequency features of an input video; and
   a video determiner configured to determine whether the input video is a deepfake based on the global frequency feature and the one or more part-based frequency features.

2. The apparatus of claim 1, wherein the feature extractor is configured to divide the input video into clips composed of a plurality of consecutive frames, and include a Fourier transformer configured to generate global time frequency data by performing a Fourier transform in the time axis direction for each pixel in the plurality of consecutive frames.

3. The apparatus of claim 2, wherein the feature extractor is configured to input a preprocessed frame obtained by applying a median filter to each of the plurality of frames and converting the frame to which the median filter is applied into gray scale.

4. The apparatus of claim 2, wherein the feature extractor further includes a convolutional neural network configured to receive the global time frequency data as input and extract a global frequency feature and one or more part-based frequency features.

5. The apparatus of claim 4, wherein the feature extractor is configured to further extract step-wise features for the global time frequency data from each block constituting the convolutional neural network, and
   the feature extractor further includes an attention proposal module configured to receive the global time frequency data and the step-wise features extracted from the convolutional neural network as input and extract center coordinates for one or more regions of interest of the input video.

6. The apparatus of claim 5, wherein the feature extractor is configured to generate part-based time frequency data for the region of interest based on the center coordinates of the region of interest from the global time frequency data.

7. The apparatus of claim 6, wherein the feature extractor is configured to input the part-based time frequency data for the region of interest into the convolutional neural network to extract the one or more part-based frequency features.

8. The apparatus of claim 4, wherein the video determiner includes:

   a temporal transformer encoder configured to generate a temporal embedding for a temporal relationship between pixels occurring along the time axis based on the global frequency feature;
   a spatial transformer encoder configured to generate a spatial embedding for a spatial relationship based on the part-based frequency features; and
   a classifier configured to classify whether the input video is a deepfake video based on the temporal embedding and the spatial embedding.

9. The apparatus of claim 8, wherein the video determiner further includes a feature blender configured to receive the global frequency feature, the one or more part-based frequency features, and the clip as input and generate an integrated feature.

10. The apparatus of claim 9, wherein the temporal transformer encoder is configured to additionally receive the integrated feature as input in addition to the global frequency feature to generate the temporal embedding, and the spatial transformer encoder is configured to additionally receive the integrated feature as input in addition to the one or more part-based frequency features to generate the spatial embedding.

11. A method of detecting deepfake videos performed on a computing device that includes one or more processors and a memory storing one or more programs executed by the one or more processors, the method comprising:

   generating a global frequency feature and one or more part-based frequency features of an input video; and
   determining whether the input video is a deepfake based on the global frequency feature and the one or more part-based frequency features.

12. The method of claim 11, wherein the generating of the global frequency feature and one or more part-based frequency features includes:

   dividing the input video into clips composed of a plurality of consecutive frames; and
   generating global time frequency data by performing a Fourier transform in the time axis direction for each pixel in the plurality of consecutive frames.

13. The method of claim 12, wherein the generating of the global frequency feature and one or more part-based frequency features includes:

   inputting the global time frequency data into a convolutional neural network to extract a global frequency feature for the global time frequency data; and
   extracting step-wise features for the global time frequency data from each block constituting the convolutional neural network.

14. The method of claim 13, wherein the generating of the global frequency feature and one or more part-based frequency features includes:

   extracting center coordinates of one or more regions of interest of the input video based on the global time frequency data and the step-wise features extracted from the convolutional neural network;
   generating part-based time frequency data for the region of interest based on the center coordinates of the region of interest from the global time frequency data; and
   inputting the part-based time frequency data for the region of interest into the convolutional neural network to extract the one or more part-based frequency features.

15. A computer program stored on a non-transitory computer readable storage medium, the computer program including one or more instructions, the instructions, when executed by a computing device having one or more processors, causing the computing device to perform:

   generating a global frequency feature and one or more part-based frequency features of an input video; and
   determining whether the input video is a deepfake based on the global frequency feature and the one or more part-based frequency features.

# FIG. 1

FIG. 2

# FIG. 3

# FIG. 4

START

GENERATE GLOBAL FREQUENCY FEATURE AND ONE OR MORE PART-BASED FREQUENCY FEATURES OF INPUT VIDEO ⟶ 410

DETERMINE WHETHER INPUT VIDEO IS DEEPFAKE BASED ON GLOBAL FREQUENCY FEATURE AND ONE OR MORE PART-BASED FREQUENCY FEATURES ⟶ 420

END

# FIG. 5

10

12

COMPUTING DEVICE

14

16 COMPUTER- READABLE STORAGE MEDIUM

PROCESSOR

PROGRAM 20

18

INPUT/OUTPUT INTERFACE 22

NETWORK COMMUNICATION INTERFACE 26

INPUT/OUTPUT DEVICE 24

| | Europäisches Patentamt |
|---|---|
| | European Patent Office |
| | Office européen des brevets |

# EUROPEAN SEARCH REPORT

**Application Number**

**EP 25 21 5965**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YUKAI WANG ET AL: "Spatial-Temporal Frequency Forgery Clue for Video Forgery Detection in VIS and NIR Scenario", ARXIV.ORG CORNELL UNIVERSITY LIBRARY, 201 OLIN LIBRARY CORNELL UNIVERSITY ITHACA, NY 14853, 5 July 2022 (2022-07-05), XP091263687, | 1-5, 8-13,15 | INV. G06V10/42 G06V10/44 G06V10/82 G06V20/40 G06V10/62 G06N3/0464 |
| A | * Abstract, sections Introduction and Proposed Approach; figure 1 * | 6,7,14 | |
| X | LIU ZIHAN ET AL: "Cross-Domain Local Characteristic Enhanced Deepfake Video Detection", 9 March 2023 (2023-03-09), ADVANCES IN VISUAL COMPUTING : 16TH INTERNATIONAL SYMPOSIUM, ISVC 2021, VIRTUAL EVENT, OCTOBER 4-6, 2021, PROCEEDINGS, PART II; [LECTURE NOTES IN COMPUTER SCIENCE, LECTURE NOTES IN COMPUTER SCIENCE; LECT.NOTES COMPUTER] SPRINGER INTERNATIONAL PUBLISH, XP047656790, ISSN: 0302-9743 ISBN: 9783030904364 [retrieved on 2023-03-09] * section 3. Proposed Method; figures 3,4 * | 1,11,15 | |
| | | | **TECHNICAL FIELDS SEARCHED (IPC)** |
| | | | G06V G06E G06N |

The present search report has been drawn up for all claims

| Place of search | Date of completion of the search | Examiner |
|---|---|---|
| The Hague | 23 March 2026 | Markaki, Vasiliki |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 745 907 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230130820